# EUROPEAN PATENT SPECIFICATION

(11) **EP 3 004 279 B1**
(45) Date of publication and mention of the grant of the patent: **28.08.2019**
(21) Application number: 14808189.6
(22) Date of filing: 03.06.2014
(51) Int. Cl.: E21B 43/22, C09K 8/88, C09K 8/90, C09K 8/68

(54) **CONCENTRATED BORATE CROSSLINKING SOLUTIONS FOR USE IN HYDRAULIC FRACTURING OPERATIONS**
KONZENTRIERTE BORATVERNETZUNGSLÖSUNGEN ZUR VERWENDUNG IN HYDRAULISCHEN FRAKTURIERUNGSOPERATIONEN
SOLUTIONS DE RÉTICULATION CONCENTRÉES DE BORATE À UTILISER DANS DES OPÉRATIONS DE FRACTURATION HYDRAULIQUE

(30) Priority: 03.06.2013 US 201361830374 P; 02.06.2014 US 201414293764
(43) Date of publication of application: 13.04.2016
(73) Proprietor: Tucc Technology LLC, Houston, Texas 77056 (US)
(72) Inventor: DOBSON, JR., James W., Houston, Texas 77082 (US); PIERCE, Kimberly A., Texas, 77042 (US)
(74) Representative: Carpmaels & Ransford LLP
(86) International application number: PCT/US2014/040729
(87) International publication number: WO 2014/197491

(56) References cited:
- US-A- 5 266 224
- US-A- 6 024 170
- US-A1- 2005 056 424
- US-A1- 2005 061 507
- US-A1- 2007 200 087
- US-A1- 2011 030 962
- US-A1- 2012 220 503
- GOEL, N. ET AL: 'SUSPENSION CHARACTERISTICS OF BORATE-CROSSLINKED GELS: RHEOLOGY AND ATOMIC FORCEMICROSCOPY MEASUREMENTS' JOURNAL OF APPLIED POLYMER SCIENCE, [Online] vol. 82, no. 12, 13 December 2001, pages 2978 - 2990, XP055300598 DOI: 10.1002/APP.2153 Retrieved from the Internet: <URL:HTTP://ONLINELIBRARY.WILEY.COM/DOI/10. 1002/APP.2153/ABSTRACT>

## Description

### BACKGROUND

### Field of the Invention.

The invention disclosed and taught herein relates generally to well treatment fluid methods and, more specifically, are related to methods for concentrated boron-containing solutions which provide instantaneous crosslinking reactions for use in subterranean well treatment fluids.

### Description of the Related Art.

The use of borax or boric acid as the source of borate ions for crosslinking guar or guar derivatives has become increasingly popular in hydraulic fracturing operations in recent years. When combined with a hydratable, organic polymer in water having a pH greater than about 7.8, dissolved borax or boric acid will generate an essentially instantaneous crosslink which is desirable for certain fracturing applications and situations. However, a major limitation of these sources of boron is their reduced solubility in fracturing fluids. In view of this, there is a need for more concentrated, cost effective boron-containing solutions. The inventions disclosed and taught herein are directed to improved compositions, methods, and associated systems for concentrated boron-containing solutions which provide instantaneous or nearly-instantaneous crosslinking of well servicing fluids, such as fracturing fluids.

"Goel, N et al.: "Suspension characteristics of borate-crosslinked gels: rheology and atomic force microscopy measurements", Journal of Applied Polymer Science, vol. 82, no. 12, 2001, pages 2978-2990 discloses borate-crosslinked guar gels prepared and characterized to understand their capability to suspend and transport sand particles through a fracture created in a petroleum reservoir. US 2011/030962 A1 discloses a method and composition for treating a subterranean formation penetrated by a wellbore, including preparing an aqueous composition comprising a source of boron, whereby boron is present in the slurry in an amount of about 1.7% or greater.

### BRIEF SUMMARY OF THE INVENTION

The present disclosure relates to methods for use in subterranean well treating operations according to claim 1. More particularly, in certain embodiments, the present disclosure relates to methods of increasing the viscosity of a subterranean treatment fluid with a boron-containing crosslinking composition that contains a liquid, a crosslinkable organic polymer that is soluble in the liquid, and a refined, readily-soluble borate solution that is used as a crosslinking agent composition. The concentrated, stable crosslinking agent composition comprises an aqueous solution, a refined borate which is disodium octaborate tetrahydrate, and a freeze-point depressant which is 1,3-propanediol, allowing for the use of the crosslinking compositions over a broad range of operating temperatures.

### DETAILED DESCRIPTION

### Definitions.

The following definitions are provided in order to aid those skilled in the art in understanding the detailed description of the present invention.
The term "alkali metal", as used herein, refers to the series of elements comprising Group 1 of the Periodic Table of the Elements.
The term "alkaline earth metal", as used herein, refers to the series of elements comprising Group 2 of the Periodic Table of the Elements, wherein Group 1 and Group 2 are the Periodic Table classifications according to the International Union of Pure and Applied Chemistry, (2002).
As used in the specification and claims, "near" is inclusive of "at."
The term "treatment", or "treating", refers to any subterranean operation that uses a fluid in conjunction with a desired function and/or for a desired purpose. The term "treatment", or "treating", does not imply any particular action by the fluid.
The term "fracturing" refers to the process and methods of breaking down a geological formation and creating a fracture, *i.e*., the rock formation around a wellbore, by pumping fluid at very high pressures (pressure above the determined closure pressure of the formation), in order to increase production rates from or injection rates into a hydrocarbon reservoir. The fracturing methods otherwise use conventional techniques known in the art.
A "crosslinker" or "crosslinking agent" is a compound mixed with a base-gel fluid to create a viscous gel. Under proper conditions, the crosslinker reacts with a multiple-strand polymer to couple the molecules, creating a crosslinked polymer fluid of high, but closely controlled, viscosity.
The term "hydraulic fracturing", as used in the present application, refers to a technique that involves pumping fluids into a well at pressures and flow rates high enough to split the rock and create opposing cracks extending up to 300 m (1000 feet) or more from either side of the borehole. Later, sand, ceramic or other suitable particulates, called "proppant," are carried by the fluid to pack the fracture, keeping it open once pumping stops and pressures decline.
As used herein, the new numbering scheme for the Periodic Table Groups are as reported in Chemical and Engineering News, 63(5), 27 (1985).
The term "liquid composition" or "liquid medium", as used herein, refers to a material which is liquid under the conditions of use. For example, a liquid medium may refer to water, and/or an organic solvent which is above the freezing point and below the boiling point of the material at a particular pressure. A liquid medium may also refer to a supercritical fluid.
As used herein, the term "polymer" or "oligomer" is used interchangeably unless otherwise specified, and both refer to homopolymers, copolymers, interpolymers, terpolymers, and the like. Likewise, a copolymer may refer to a polymer comprising at least two monomers, optionally with other monomers. When a polymer is referred to as comprising a monomer, the monomer is present in the polymer in the polymerized form of the monomer or in the derivative form of the monomer. However, for ease of reference the phrase comprising the (respective) monomer or the like is used as shorthand.
The term "refined borate(s)" as used herein refers to borates that have been subjected to one or more chemical and mechanical processing steps, including crushing, dissolving, settling, crystallizing, filtering, and drying.
The term "readily-soluble" as used herein with respect to material properties, means a material that is capable of being dissolved in water, at room temperature, and assisted only by stirring or agitation, at a rate such that at least 90% of the material, by volume, will be dissolved in the water and form a substantially uniform aqueous solution therewith, in a period of time less than about 1 hour. Generally, readily soluble materials such as the borate materials described below with respect to the preferred embodiments dissolve in water in less than 10 minutes at ambient (room) temperatures, e.g. 25 °C.
The terms "borate", and "boron-containing material", are used interchangeably herein, and refer to salts or esters of boric acid, including boron-containing minerals (those minerals that contain a borate anion group, BO₃⁻, and borate units that are polymerized, resulting in B₂O₄, B₂O₅, B₃O₆, as well as other, anions) and materials, and their salts.
The term "pour point", as used herein, means the lowest temperature at which a liquid specimen can be poured. In a variation, the pour point is the lowest temperature at which movement of a test specimen is observed under prescribed conditions as described in ASTM D97-11, the entire disclosure of which is hereby incorporated by reference.
The term "freezing point", as used herein, refers to the temperature at which the solution or mixture in question starts to freeze. That is, the term "freezing point" refers to the temperature at which a material undergoes a phase transition from the liquid to the solid state, or vice versa.
The term "well treatment fluid" or "well treating fluid", as used herein, refers to drilling, stimulation, completion, and workover fluids for use in hydrocarbon recovery operations from subterranean formations. Such fluids specifically include, but are not restricted to, hydraulic fracturing fluids.
The terms "instantaneous" or "near instantaneous", as used herein, refer to reactions that occur so rapidly that they are not noticeable to the typical human, as contrasted with reactions having a delayed reaction time that is often noticeable by a user.

The written description of specific structures and functions below is not presented to limit the scope of what Applicants have invented or the scope of the appended claims. Rather, the written description is provided to teach any person skilled in the art to make and use the inventions for which patent protection is sought. Those skilled in the art will appreciate that not all features of a commercial embodiment of the inventions are described or shown for the sake of clarity and understanding. Persons of skill in this art will also appreciate that the development of an actual commercial embodiment incorporating aspects of the present inventions will require numerous implementation-specific decisions to achieve the developer's ultimate goal for the commercial embodiment. Such implementation-specific decisions may include, and likely are not limited to, compliance with system-related, business-related, government-related and other constraints, which may vary by specific implementation, location and from time to time. While a developer's efforts might be complex and time-consuming in an absolute sense, such efforts would be, nevertheless, a routine undertaking for those of skill in this art having benefit of this disclosure. It must be understood that the inventions disclosed and taught herein are susceptible to numerous and various modifications and alternative forms. Lastly, the use of a singular term, such as, but not limited to, "a," is not intended as limiting of the number of items. Also, the use of relational terms, such as, but not limited to, "top," "bottom," "left," "right," "upper," "lower," "down," "up," "side," and the like are used in the written description for clarity and are not intended to limit the scope of the invention or the appended claims.

Applicants have created compositions for use in crosslinking of well servicing or treatment fluids, such as (but not limited to) hydraulic fracturing fluids, that include a crosslinkable organic polymer, wherein the compositions more particularly include a liquid, a crosslinkable organic polymer that is soluble in the liquid, and a refined, readily-soluble borate solution that is used as a crosslinking agent composition. The concentrated, stable crosslinking agent composition comprises an aqueous solution, a refined borate which is disodium octaborate tetrahydrate, and a freeze-point depressant which is 1,3-propanediol, allowing for the use of the crosslinking compositions over a broad range of operating temperatures.

The typical crosslinkable or hydratable organic polymers, sometimes referred to equivalently herein as "gelling agents," "viscosifying agents," or "solvatable polymers," that may be included in the treatment fluids and systems described herein, particularly aqueous fluids and systems, and that may be used in connection with the presently disclosed inventions, typically comprise biopolymers, synthetic polymers, or a combination thereof, wherein the "gelling agents" or crosslinkable organic polymers are at least slightly soluble in water (wherein slightly soluble means having a solubility of at least about 0.01 kg/m³) and may be considered to be hydratable (hydratable polymers). Without limitation, these crosslinkable organic polymers may serve to increase the viscosity of the treatment fluid during application. A variety of gelling agents can be used in conjunction with the methods and compositions of the present inventions, including, but not limited to, hydratable polymers that contain one or more functional groups such as hydroxyl, *cis*-hydroxyl, carboxylic acids, derivatives of carboxylic acids, sulfate, sulfonate, phosphate, phosphonate, amino, or amide. The gelling agents may also be biopolymers comprising natural, modified and derivatized polysaccharides, and derivatives thereof that contain one or more of the monosaccharide units selected from the group consisting of galactose, mannose, glucoside, glucose, xylose, arabinose, fructose, glucuronic acid, or pyranosyl sulfate.

Suitable gelling agents which may be used in accordance with the present disclosure include, but are not limited to, guar, guar derivatives (such as carboxyalkyl guar or hydroxyalkylated guar), hydroxypropyl guar (HPG), carboxymethyl guar (CMG), hydroxyethyl guar (HEG), hydroxybutyl guar (HBG), cellulose, carboxymethyl cellulose (CMC), carboxymethyl hydroxyethyl cellulose (CMHEC), hydroxyethylcellulose (HEC), carboxymethylhydroxypropyl guar (CMHPG), other derivatives of guar gum, xanthan, galactomannan gums and gums comprising galactomannans, cellulose, and other cellulose derivatives, derivatives thereof, and combinations thereof, such as various carboxyalkylcellulose ethers, such as carboxyethylcellulose; mixed ethers such as carboxyalkylethers; hydroxyalkylcelluloses such as hydroxypropylcellulose; alkylhydroxyalkylcelluloses such as methylhydroxypropylcellulose; alkylcelluloses such as methylcellulose, ethylcellulose and propylcellulose; alkylcarboxyalkylcelluloses such as ethylcarboxymethylcellulose; alkylalkylcelluloses such as methylethylcellulose; hydroxyalkylalkylcelluloses such as hydroxypropylmethylcellulose; biopolymers such as xanthan, diutan, and scleroglucan; combinations thereof, and the like. Preferably, in accordance with one non-limiting embodiment of the present disclosure, the gelling agent is guar, hydroxypropyl guar (HPG), or carboxymethylhydroxypropyl guar (CMHPG), alone or in combination.

In some embodiments of the disclosure, the gelling agent, or viscosifier, is a water-dispersible, nonionic, hydroxyalkyl galactomannan polymer or a substituted hydroxyalkyl galactomannan polymer. Examples of suitable hydroxyalkyl galactomannan polymers include, but are not limited to, hydroxy-C₁ - C₄-alkyl galactomannans, such as hydroxy-C₁ - C₄-alkyl guars. Preferred examples of such hydroxyalkyl guars include but are not limited to hydroxyethyl guar (HE guar), hydroxypropyl guar (HP guar), and hydroxybutyl guar (HB guar), and mixed C₂-C₄, C₂/C₃, C₂/C₄, or C₃/C₄ hydroxyalkyl guars. Hydroxymethyl groups can also be present in any of these.

It is sometimes preferred that the hydratable organic polymer, such as guar or hydroxyalkylated guar, has a molecular weight ranging from about 1 million to about 3 million. The carboxyl content of the hydratable polysaccharides is typically expressed as the "Degree of Substitution" (DS), and the DS of the carboxylated guar is typically in the range of from about 0.08 to about 0.18. The hydroxypropyl content of the hydroxyalkylated guar, expressed as Molar Substitution (defined as the number of moles of hydroxyalkyl groups per mole of anhydroglucose), is typically in the range of from about 0.25 to about 0.6. Further preferred as the hydratable organic polymer in certain aspects of the invention include those polymers available from a number of commercial sources (e.g., Baker Hughes) as GW-3 (highly refined guar gum), GW-4 (guar), GW-2 (guar), "GW45" (CMG), "GW32" (HPG) and "GW38" (CMHPG), as well as slurried counterparts of these hydratable organic polymers, such as GLFC-5 (a high-yield guar gum, GW-3 slurried in mineral oil). Particularly preferred, in accordance with select embodiments herein, are gums-water soluble polymers consisting of polysaccharides with varying polymerization degrees, including the polysaccharide hydrocolloids. Typical examples of commercially available, gum-type hydratable organic polymers include xanthan gums and their derivatives (e.g., partially acetylated xanthan gum), succinoglucans, and the JAGUAR® family of products from Rhodia-Novecare, including JAGUAR® 8600, JAGUAR® 418, JAGUAR® 308 NB, JAGUAR® 2700, JAGUAR® 8000, JAGUAR® HP 105 hydroxypropyl guar, and JAGUAR® HP-120.

Non-limiting examples of suitable synthetic polymers include acrylamide polymers, vinyl sulfonates, and the like. An acrylamide polymer maybe a polymer or copolymer of acrylamide useful as, e.g., a friction reducing agent for slickwater fracturing treatments. Even though these acrylamide polymers are often called "polyacrylamide", many are actually copolymers of acrylamide and one or more other chemical species. The main consequence is to give the "modified" polyacrylamide some ionic character. The polyacrylamide may also be used as a homopolymer. As used herein, the expression "polyacrylamide" is meant to encompass acrylamide homopolymers and copolymers, or any suitable synthetic form of polyacrylamide. As used herein, "homopolymers" are those polymers containing less than about 0.1% by weight of other co-monomers. Combinations or mixtures of homopolymers and copolymers may be used as well. The copolymers may include two or more different co-monomers and may be random or block copolymers. The co-monomers may include, for example, sodium acrylate. The polyacrylamide polymers and copolymers useful for the invention may include those having a number-average molecular weight (Mₙ) or a weight-average molecular weight (M_{w}) of from about 1,000, or lower, to about 20 million, or above, with from about 1 million to about 5 million being typical. Typically, the amount of hydratable polymer, or gelling agent, employed can vary widely, but can be preferably in the range of about 15 to about 50, or about 20 to about 30, pounds per 1,000 gallons of aqueous liquid medium (e.g., water) in the fluid. In at least some aspects of the present disclosure, the amount of liquid medium is preferably minimized to employ the least amount possible while still achieving the desired level of polymer hydration.

Additional natural polymers suitable for use as crosslinkable organic polymers/gelling agents in accordance with the present disclosure include, but are not limited to, locust bean gum, tara (*Cesalpinia spinosa lin*) gum, konjac (*Amorphophallus konjac*) gum, starch, cellulose, karaya gum, xanthan gum, tragacanth gum, arabic gum, ghatti gum, tamarind gum, carrageenan and derivatives thereof. Additionally, synthetic polymers and copolymers that contain any of the above-mentioned functional groups may also be used. Non-limiting examples of such synthetic polymers include, but are not limited to, polyacrylate, polymethacrylate (also known as PMMA, poly(methyl methacrylate)), polyacrylamide (poly(2-prop-enamide)), polyvinyl alcohol (PVA), styrene maleic anhydride (SMA), methylvinyl ether copolymers, and polyvinylpyrrolidone (PVP).

Generally speaking, the amount of a hydratable, crosslinkable organic polymer that may be included in a treatment fluid for use in conjunction with the present disclosure depends on the viscosity of the resultant treatment fluid desired. Thus, the amount to include will be an amount effective to achieve a desired viscosity effect. In certain exemplary embodiments of the present inventions, the gelling agent may be present in the treatment fluid in an amount in the range of from about 0.1% to about 60% by weight of the treatment fluid. In other exemplary embodiments, the gelling agent may be present in the range of from about 0.1% to about 20% by weight of the treatment fluid. In general, however, the amount of crosslinkable organic polymer included in the well treatment fluids described herein is not particularly critical so long as the viscosity of the fluid is sufficiently high to keep the proppant particles or other additives suspended therein during the fluid injecting step into the subterranean formation. Thus, depending on the specific application of the treatment fluid, the crosslinkable organic polymer may be added to the aqueous base fluid in concentrations ranging from about 15 to 60 pounds per thousand gallons (lb/1,000 gal) by volume of the total aqueous fluid (1.8 to 7.2 kg/m³). In a further non-limiting range for the present inventions, the concentration may range from about 20 lb/1,000 gal (2.4 kg/m³) to about 40 lb/1,000 gal (4.8 kg/m³). In further, non-restrictive aspects of the present disclosure, the crosslinkable organic polymer/gelling agent present in the aqueous base fluid may range from about 25 lb/1,000 gal (about 3 kg/m³) to about 40 lb/1,000 gal (about 4.8 kg/m³) of total fluid. One skilled in the art, with the benefit of this disclosure, will recognize the appropriate gelling agent and amount of the gelling agent to use for a particular application. Preferably, in accordance with one aspect of the present disclosure, the fluid composition or well treatment system will contain from about 1.2 kg/m³ (0.075 lb/ft³) to about 12 kg/m³ (0.75 lb/ft³) of the gelling agent/crosslinkable organic polymer, most preferably from about 2.4 kg/m³ (0.15 lb/ft³) to about 7.2 kg/m³ (0.45 lb/ft³).

In accordance with the present disclosure, the hydratable polymer and an aqueous fluid are blended to form a hydrated solution. The hydratable polymer can be any of the gelling agents as detailed herein. These gelling agents are used as viscosifying agents, in that they are capable of gelling in the presence of the crosslinking agent present in the solution to form a gelled base fluid.

The base fluid of the well treatment fluids that may be used in conjunction with the method of these inventions comprise an aqueous-based fluid. The aqueous (water)-based fluid may be from any source provided that it does not contain compounds that may adversely affect other components in the treatment fluid. The base fluid may comprise a fluid from a natural or synthetic source. In certain exemplary embodiments of the present inventions, an aqueous-based fluid may comprise fresh water or salt water depending upon the particular density of the composition required. The term "salt water" as used herein may include unsaturated salt water or saturated salt water "brine systems", such as a NaCl, or KCl brine, as well as heavy brines including CaCl₂, CaBr₂, NaBr, KBr, ZnBr₂, ZnCl2, ZnBr₂/CaBr₂, ZnBr₂/KBr, sodium formate (NaCO₂H), cesium formate (CsCO₂H), and potassium formate (KCO₂H). The brine systems suitable for use herein may comprise from about 1% to about 75% by weight of an appropriate salt, including about 2 wt. %, about 3 wt. %, about 5 wt. %, about 10 wt. %, about 15 wt. %, about 20 wt. %, about 25 wt. %, about 30 wt. %, about 35 wt. %, about 40 wt. %, about 45 wt. %, about 50 wt. %, about 55 wt. %, about 60 wt. %, about 65 wt. %, about 70 wt. %, and about 75 wt. % salt, without limitation, as well as concentrations falling between any two of these values, such as from about 21 wt. % to about 66 wt. % salt, inclusive. Generally speaking, the base fluid will be present in the well treatment fluid in an amount in the range of from about 2% to about 99.5% by weight, e.g., a 2 % (w/w) KCl solution. In other exemplary embodiments, the base fluid may be present in the well treatment fluid in an amount in the range of from about 70% to about 99% by weight. Depending upon the desired viscosity of the
treatment fluid, more or less of the base fluid may be included, as appropriate. One of ordinary skill in the art, with the benefit of this disclosure, will recognize an appropriate base fluid and the appropriate amount to use for a chosen application.

In accordance with exemplary methods of the present disclosure, an aqueous fracturing fluid, as a non-limiting example, is first prepared by blending one or more crosslinkable organic polymers into a liquid, which may be a hydrocarbon, such as light distillate, or water, or an aqueous base fluid, depending on the particular subterranean well being treated. The aqueous base fluid may be, for example, water, brine (e.g., a NaCl or KCl brine), aqueous-based foams or water-alcohol mixtures. The brine base fluid may be any brine, conventional or to be developed which serves as a suitable media for the various components. As a matter of convenience, in many cases the brine base fluid may be the brine available at the site used in the completion fluid, for a non-limiting example.

Any suitable mixing apparatus may be used for this procedure. In the case of batch mixing, the crosslinkable organic polymer, such as guar or a guar derivative, and the aqueous fluid are blended for a period of time sufficient to form a gelled or viscosified solution. The organic polymer that is useful in the present inventions is preferably any of the hydratable or solvatable polysaccharides, as described herein above, and in particular those hydratable polysaccharides which are capable of gelling in the presence of a crosslinking agent to form a gelled base fluid. The most preferred hydratable polymers for the present inventions are guar gums, carboxymethyl hydroxypropyl guar and hydroxypropyl guar, as well as combinations thereof. In other embodiments of the present disclosure, the crosslinkable organic polymer, or gelling agent, may be depolymerized, as necessary. The term "depolymerized," as used herein, generally refers to a decrease in the molecular weight of the gelling agent. Depolymerized polymers are described in U.S. Pat. No. 6,488,091.

In addition to the aqueous base fluid and hydratable/crosslinkable organic polymer, the treatment fluid of the present disclosure comprises a stable crosslinking composition, which is used to crosslink the hydratable or solvatable organic polymer and create a crosslinked, viscosified and gelled treatment fluid. In accordance with the instant disclosure, the crosslinking composition comprises a readily-soluble boron-containing material, which is a refined borate crosslinking agent, wherein the readily-soluble boron-containing material, which is a refined borate crosslinking agent, is an octaborate material.

### A. REFINED BORATES.

Refined borates generally include those borates that are exposed to both chemical and mechanical steps, prior to use. Typical processes that are included in the processing of refined borates include crushing, dissolving, settling, crystallizing, filtering, and drying. In the crushing step of the process, borate ore from the mine is crushed before refining. Crushers reduce the ore to approximately one-inch pieces, increasing the surface area of the ore, which makes the refining process more efficient. In the subsequent dissolving step, the crushed ore is mixed with hot water to create a "liquor" which is a combination of borates and water. The borates dissolve in the hot water, while screens remove insoluble material such as rocks, sand and other solids, thus forming a saturated borate solution. Additionally, the hot water solution can optionally be reacted with sulfuric acid if boric acid is to be manufactured. In the settling process step, the saturated borate solution is pumped into large settling tanks called thickeners. As the rock and clay mixture is heavier, it settles in the bottom of the thickener, leaving borates dissolved in the liquor. A crystallizing step is next. The liquor is transported to tanks called crystallizers, where the solution slowly cools. The cooling forces the borates to crystallize and come out of solution, forming a slurry of borate crystals and water. The slurry is poured over special filters and washed to ensure purity in the filter process step. Water from the filtering process is typically drawn away by a vacuum located beneath the filters. At the drying step, the damp borate crystals are removed from the filters and transported to rotating dryers where hot air is used to finish the crystal drying process.

### B. SOLUBLE BORATE CROSSLINKING SYSTEMS.

In accordance with the present disclosure, the viscosifying well treatment fluids described herein comprise two general components, the guar- or other crosslinkable organic polymer solution in a suitable base fluid or liquid, and a concentrated borate crosslinking solution comprising a readily-soluble borate-containing crosslinking agent in an appropriate fluid, particularly water, or an aqueous base fluid, depending on the particular subterranean well being treated. The aqueous base fluid may be, for example, and without limitation, water, brine (e.g., a NaCl or KCl brine), aqueous-based foams or water-alcohol mixtures. The brine base fluid may be any brine, conventional or to be developed which serves as a suitable media for the various components. As a matter of convenience, in many cases the brine base fluid may be the brine available at the site used in the completion fluid, for a non-limiting example.

The readily-soluble boron-containing crosslinking agent, in accordance with the present disclosure, is a refined borate material, which is disodium octaborate tetrahydrate (DOT) (Na₂B₈O₁₃·4H₂O, such as ETIDOT-67® or AQUABOR®, both available from American Borate Company (Virginia Beach, VA)), having the molecular formula Na₂B₈O₁₃ - 4 H₂O and containing 67.5 % (min) B₂O₃ and 15.0 % (min) Na₂O₃.

The disodium octaborate tetrahydrate (DOT) is considered refined due to the unique production process associated with its processing. The production process for refined DOT combines granular boric acid (H₃BO₃/B₂O₃ = 56.25 % - 56.32%) and borax decahydrate (Na₂B₄O₇ • 10H₂O/B₂O₃ = 36.47% - 37.2%) in water at the ratio of 39.34 wt. % boric acid and 60.66 wt. % borax decahydrate. The DOT forms through the following, empirical chemical reaction:

Na₂O • 2B₂O₃ • 10H₂O + 4H₃BO₃ → Na₂O • 4B₂O₃ • 4H₂O + 12H₂O

The process starts with boric acid and borax decahydrate being fed from feed silos to a solution tank, where they are admixed together with water. From the initial mixing tank, the solution is pumped to a middle mixing tank through a horizontal filter assembly, and then to a final mixing tank. Thereafter, the concentrated solution of disodium octaborate tetrahydrate (DOT) is homogenized, filtered, and maintained at a temperature of about 98 °C (208.4 °F). The mixture then passes through a high-speed atomizer (-10,000 rotations per minute) as it enters a spray dryer, where it is dispersed at very high speed against pressurized hot air (380 °C; 716 °F). Fine dry particles of DOT are formed and subsequently separated in cyclones, producing a finished product (99.9% minimum purity) with a particle size ranging from about 1 micron (□F).to about 200 microns with a chemical composition of Na₂O (14.7%), B₂O₃ (67.1%), and H₂O (18.2%).

In accordance with the present disclosure, the readily-soluble boron-containing crosslinking agent is present in the crosslinking composition in an amount ranging from about 0.1 wt. % to about 10.0 wt. %, inclusive, and more preferably in an amount ranging from about 0.5 wt. % to about 4 wt. %, inclusive. In accordance with other aspects of the present disclosure, the readily-soluble boron-containing crosslinking agent is present, as an additive concentration, in an amount ranging from about 4.5 L/4,500 L (1 gal/1,000 gallons) to about 45 L/4,500 L (10 gal/1,000 gallons), inclusive. In further, non-restrictive aspects of the present disclosure, the boron-containing crosslinking agent (DOT) is present, as an additive concentration, in an amount that may range from about 9.1 L/4,500 L (2 gal/1,000 gal.) to about 36.4 L/4,500 L (8 gal/1,000 gal), inclusive. One skilled in the art, with the benefit of this disclosure, will recognize the appropriate gelling agent and amount of the gelling agent to use for a particular application.

The concentrated, stable crosslinking agent composition of the present disclosure further includes one or more freeze point depressants, alternatively referred to herein as freezing point depressing agents, or active hydrogencontaining materials. Such freezing point depressants may be included in an amount ranging from about 20 wt. % of the total crosslinking agent composition solution, to about 70 wt.% of the total crosslinking agent composition solution, inclusive, and including ranges within this range, such as from about 35 wt. % to about 55 wt. %, inclusive.

Those of ordinary skill in the art will be able to determine the freezing point of a blend, using the standard freezing point determination. For example, an empirical method of freezing point determination is to cool the sample, which may be done by surrounding it with an ice bath while stirring, and record the temperature at regular intervals, e.g., every minute, until the material begins to solidify. As solidification occurs, the temperature begins to level off, which signifies the freezing point of the material. In addition, analytical methods of determining the freezing point may also be used, such as Differential Scanning Calorimetry (DSC).

In accordance with the present invention, the freezing point depressing agent is the hydroxyl-terminated freezing point depressant 1,3-propanediol (PDO), such as the Susterra® and Zemea® propanediol products available from DuPont Tate & Lyle Bio Products, made from corn sugar.

In particular, the concentrated, stable crosslinking agent composition used in the compositions of the present disclosure are modified with one or more freezing point depressing agents so that the freezing point of the crosslinking agent composition is less than the freezing point of the crosslinking agent by itself in an aqueous solution, and so that any borate ions dispersed within the solution stays dispersed under a host of storage and shipping conditions. Thus, this modified crosslinking agent composition results in a storage stable crosslinking agent dispersion. As used herein, the term "storage stable" refers to the ability of a disperson, blend, composition, or the like, to resist freezing at room temperature (about 20 °C to about 25 °C (about 68 °F to about 77 °F)) and below (down to about -48 °C (about -55 °F)), as well as the ability of the dispersion, blend, composition, or the like to retain their beneficial properties, such as crosslinking activity, even if frozen. For example, the concentrated, stable crosslinking agent compositions of the present invention that contain one or more freezing point depressing agents maintain soluble borate ion dispersion quality when frozen and also after a freeze/thaw cycle.

In yet another embodiment of the present disclosure, fluids for treating (including fracturing and hydraulic fracturing) subterranean formations may be from about 250 to about 3900; resorcinol-di-(β-hydroxyethyl) ether and its derivatives; hydroquinone-di-(P-hydroxyethyl) ether and its derivatives; 1,3-bis-(2-hydroxyethoxy) benzene; 1,3-bis-[2-(2-hydroxyethoxy) ethoxy] benzene; N,N-bis(β-hydroxypropyl) aniline; 2-propanol-1,1'-phenylaminobis; and mixtures thereof. In accordance with one aspect of the present disclosure, the freezing point depressing agent is the hydroxyl-terminated freezing point depressant 1,3-propanediol (PDO), such as the Susterra® and Zemea® propanediol products available from DuPont Tate & Lyle Bio Products, made from corn sugar. The hydroxy-terminated freezing point depressing agent may have a molecular weight of at least about 50. In one embodiment, the molecular weight of the hydroxy-terminated freezing point depressing agent ranges from about 50 to about 200, inclusive.

In addition, suitable amine-terminated freezing point depressing agents include, but are not limited to, ethylene diamine; hexamethylene diamine; 1-methyl-2,6-cyclohexyl diamine; tetrahydroxypropylene ethylene diamine; 2,2,4- and 2,4,4-trimethyl-1,6-hexanediamine; 4,4'-bis-(sec-butylamino)-dicyclohexylmethane; 1,4-bis-(sec-butylamino)-cyclohexane; 1,2-bis-(sec-butylamino)-cyclohexane; derivatives of 4,4'-bis-(sec-butylamino)-dicyclohexylmethane; 4,4'-dicyclohexylmethane diamine; 1,4-cyclohexane-bis-(methylamine); 1,3-cyclohexane-bis-(methylamine); diethylene glycol di-(aminopropyl) ether; 2-methylpentamethylene-diamine; diaminocyclohexane; diethylene triamine; triethylene tetramine; tetraethylene pentamine; propylene diamine; 1,3-diaminopropane; dimethylamino propylamine; diethylamino propylamine; dipropylene triamine; imido-bis-propylamine; monoethanolamine, diethanolamine; triethanolamine; monoisopropanolamine, diisopropanolamine; isophoronediamine; 4,4'-methylenebis-(2-chloroaniline); 3,5; dimethylthio-2,4-toluenediamine; 3,5-dimethylthio-2,6-toluenediamine; 3,5-diethylthio-2,4-toluenediamine; 3,5; diethylthio-2,6-toluenediamine; 4,4'-bis-(sec-butylamino)-diphenylmethane and derivatives thereof; 1,4-bis-(sec-butylamino)-benzene; 1,2-bis-(sec-butylamino)-benzene; N,N'-dialkylamino-diphenylmethane; N,N,N',N'-tetrakis (2-hydroxypropyl) ethylene diamine; trimethyleneglycol-di-p-aminobenzoate; polytetramethyleneoxide-di-p-aminobenzoate; 4,4'-methylenebis-(3-chloro-2,6-diethyleneaniline); 4,4'-methylenebis-(2,6-diethyl-aniline); meta-phenylenediamine; paraphenylenediamine; and mixtures thereof. In one embodiment, the amine-terminated curing agent is 4,4'-bis-(sec-butylamino)-dicyclohexylmethane.

In particular, the concentrated, stable crosslinking agent composition used in the compositions of the present disclosure may be modified with one or more freezing point depressing agents so that the freezing point of the crosslinking agent composition is less than the freezing point of the crosslinking agent by itself in an aqueous solution, and so that any borate ions dispersed within the solution stays dispersed under a host of storage and shipping conditions. Thus, this modified crosslinking agent composition results in a storage stable crosslinking agent dispersion. As used herein, the term "storage stable" refers to the ability of a disperson, blend, composition, or the like, to resist freezing at room temperature (about 68 °F to about 77 °F) and below (down to about -55 °F), as well as the ability of the dispersion, blend, composition, or the like to retain their beneficial properties, such as crosslinking activity, even if frozen. For example, the concentrated, stable crosslinking agent compositions of the present invention that contain one or more freezing point depressing agents maintain soluble borate ion dispersion quality when frozen and also after a freeze/thaw cycle.

In yet another embodiment of the present disclosure, fluids for treating (including fracturing and hydraulic fracturing) subterranean formations may be prepared using the compositions described herein. In particular, crosslinking fracturing fluid systems comprising a borate system prepared in accordance with the instantly disclosed processes may be prepared, wherein the fluid or system is prepared by a process comprising the steps of (a) providing an aqueous mixture of one or more hydrated galactomannan gums or related compounds, such as guar or hydroxypropyl guar (HPG); and (b) adding to the aqueous mixture a cross-linking composition for instantaneous crosslinking of the hydrated galactomannan gum or related compound, wherein the crosslinking composition comprises a borate system comprising a refined, readily-soluble boron-containing mineral or material (such as a refined borate). The use of the readily-soluble borate system of the present disclosure provides a crosslinking composition that exhibits a stabilized crosslink time as the boron content following the initial crosslink, the stability in crosslink time being determined by a vortex closure test. Such a well treating fluid or fluid system may further comprise process steps of mixing the aqueous mixture of the hydrated galactomannan gum or equivalent and the (boron-releasing) crosslinking composition, crosslinking the hydrated galactomannan gum or related compound with the borate ions in the crosslinking composition, and pumping into a subterranean formation through a wellbore at fracturing pressures.

The well treatment fluid systems described herein may also further include one or more components suitable for modification of the rheological and/or chemical properties of the fluid. The well treating fluid or fluid system, particularly if the fluid is a fracturing fluid, may also typically have incorporated therein a breaker for the gelled fluid which can be any of the type commonly employed in the art for borate crosslinked guar based fluids, including enzymatic breakers as well as soluble (e.g., oxidants such as ammonium persulfate or peroxide) and insoluble breakers. Various breaking agents that may also be used with the methods and compositions of the present disclosure in order to reduce or "break" the gel of the fluid, include but are not necessarily limited to enzymes, oxidizers, polyols, aminocarboxylic acids, and the like, along with gel breaker aids, as appropriate.

In addition, such fluids can also contain other conventional additives common to the well service industry such as surfactants, corrosion inhibitors, and the like, as well as proppants. Propping agents are typically added to the base fluid prior to the addition of the crosslinking agent, although this is not necessary for purposes of the present disclosure. Propping agents suitable for use with fracturing fluids of the present disclosure include, but are not limited to, sand, quartz sand grains, glass and ceramic beads, high-strength ceramics, sintered bauxite, walnut shell fragments and other nut- or seed-based proppants, aluminum pellets, nylon pellets, and the like, any of which may be coated or non-coated. The propping agents are normally used in concentrations between about 1 to 8 pounds per gallon of fracturing fluid composition but higher or lower concentrations can be used as required.

The well treatment fluids further comprise one or more buffering or pH control additives, such as potassium carbonate, magnesium carbonate, potassium hydroxide, sodium hydroxide, sodium phosphate, sodium hydrogen phosphate, boric acid-sodium hydroxide, citric acid-sodium hydroxide, boric acid-borax, sodium bicarbonate, ammonium salts, sodium salts, potassium salts, dibasic phosphate, tribasic phosphate, calcium oxide, magnesium oxide, zinc oxide, or other similar buffering agents, in an amount ranging from 0.1 wt. % to about 1 wt. %, inclusive. The buffering agents, when included, are effective to provide a pH for the well treating or fracturing fluid system in a range from about pH 8.0 to about pH 12.0 preferably in a range from about pH 9.5 to about pH 11.7, and more preferably from about pH 9.8 to about pH 11.5, inclusive.

The treatment fluids may further include one or more clay stabilizers, which have a variety of functions, including acting to aid in the prevention of clay minerals in the reservoir rock expanding on contact with water and plugging the reservoir, by stabilizing clay particles in the fluid. Exemplary clay stabilizers include, but are not limited to, clays of varying shapes and sizes (such as minute, plate-like, tube-like, and/or fiber-like particles having a large surface area), such as clay minerals of the montmorillonite (smectite) group, including montmorillonite, saponite, nontronite, hectorite, and sauconite; clay minerals of the kaolin group such as kaolinite, nacrite, dickite, and halloysite; clay minerals of the hydrousmica group, such as hydrobiotite, glauconite, illite and bramallite; clay minerals of the chlorite group, such as chlorite and chamosite; clay minerals not belonging to the above groups, such as vermiculite, attapulgite, and sepiolite; mixed-layer varieties of such minerals; and chloride-free clay stabilizers, such as amines, neutralized amines, and quaternary polyamines, as well as mixtures thereof. An exemplary clay stabilizer is CLAY TREAT-3C™, a clay stabilizer substitute for potassium chloride, available from Baker Hughes, Inc. (Houston, TX).

The fluids of the present disclosure may further contain a number of optionally-included additives, as appropriate or desired, such optional additives including, but not limited to, suspending agents/anti-settling agents, stabilizers, deflocculants, breakers, chelators, dispersants, non-emulsifiers, fluid loss additives, biocides, weighting agents, wetting agents, lubricants, friction reducers, pH control agents, oxygen scavengers, surfactants, fines stabilizers, metal chelators, metal complexors, antioxidants, polymer stabilizers, scale inhibitors, scale dissolvers, shale stabilizing agents, corrosion inhibitors, wax inhibitors, wax dissolvers, asphaltene precipitation inhibitors, waterflow inhibitors, sand consolidation chemicals, leak-off control agents, permeability modifiers, microorganisms, viscoelastic fluids, gases, foaming agents, and combinations thereof, such that none of the optionally-included additives adversely react or effect the other constituents of these inventions.

According to select embodiments, the compositions of the present disclosure further include one or more surfactants, particularly viscoelastic surfactants, selected from the group consisting of anionic, cationic, zwitterionic, amphoteric, nonionic, and combinations thereof.

According to a further embodiment, the fluid compositions described herein may include one or more chelating agents, able to complex with excess or unwanted metal ions, including but not limited to sodium, potassium, calcium, and magnesium. The chelating agent may be any suitable chelating agent for the ion(s) to be complexed, including but not limited to benzoic acid, citric acid, sodium citrate, lactic acid, malic acid, phtalic acid, tartaric acid, ethylenediaminetetraacetic acid (EDTA), dimethylethylenediaminotetraacetic acid (DMEDTA), cyclohexyldiaminotetraacetic acid (CDTA), and mixtures thereof. When used, the chelating agent or chelating agent mixture is present in the solution in an amount ranging from about 0.0001 % by weigth (wt. %) to about 25 % by weight (wt. %), alternatively between about 0.001 wt. % and about 20 wt. %, and more particularly from about 0.01 wt. % to about 15 wt. %, inclusive.

One of ordinary skill in the art will recognize the appropriate type of additive useful for a particular subterranean treatment operation. Further, all such optional additives may be included as needed, provided that they do not disrupt the structure, stability, mechanism of controlled delay, or subsequent degradability of the crosslinked gels at the end of their use.

The various methods and embodiments of the well treatment fluids and application methods described herein can be included in combination with each other to produce variations of the disclosed methods and embodiments. Discussion of singular elements can include plural elements and vice-versa.

As set forth herein, the fluids and associated manufacturing methods and treating methods can be used in fracturing, particularly hydraulically fracturing, a subterranean formation to enhance the production of oil or gas from underground reservoirs. Techniques for hydraulically fracturing a subterranean formation will be known to persons of ordinary skill in the art, and will involve pumping the fracturing fluid at high pressure into the borehole and out into the surround formation. The fluid pressure is above the minimum *in-situ* rock stress, thus creating or extending fractures in the formation, vertically or horizontally as appropriate and depending on orientation of the section of wellbore being treated. The hydraulically-induced fracture propagates outward from the wellbore into the reservoir as pumping continues. [See, for example, *"*Reservoir Stimulation, 3rd Ed." Economides, M.J. and Nolte, K.G., Eds., John Wiley & Sons, Ltd., 2000; and, Yew, C.H., "Mechanics of Hydraulic Fracturing", Gulf Publishing Company, Houston, Texas; 1997.]

In the typical operation, a hydraulic fracturing consists of pumping a proppant-free viscous fluid, or "pad," usually water with some fluid additives to generate high viscosity, into a well faster than the fluid can escape into the formation so that the pressure rises and the rock breaks, creating artificial fractures and/or enlarging existing fractures. Then, proppant particles are added to the fluid to form a slurry that is pumped into the fracture to prevent it from closing when the pumping pressure is released. The proppant suspension and transport ability of the treatment base fluid traditionally depends on the type of viscosifying agent added.

In the fracturing treatment, crosslinking fluids may be used in the pad treatment, the proppant stage, or both. The components of the crosslinking fluid may be mixed on the surface. Alternatively, a portion of the fluid may be prepared on the surface and pumped down the wellbore tubing while another portion can be pumped down the annular, wherein the two portions admix down hole.

Another embodiment includes use of the fluid composition of the present disclosure for cleanup operations. The term "cleanup" or "fracture cleanup" refers to the process of removing the fracturing fluid (without the proppant) from the fracture and wellbore after the fracturing process has been completed. Techniques for promoting fracture cleanup traditionally involve reducing the viscosity of the fracture fluid as much as practical so that it will more readily flow back toward the wellbore. The field preparation and pumping of the fracturing fluid can be performed by either of two processes: continuous mixing or batch mixing.

In the continuous process, water or brine is drawn from a storage vessel at a known rate and the crosslinkable polymer is metered at a rate calculated to give the desired concentration of polymer in the water. The polymer will generally evenly disperse in the water and hydrate quickly. In the continuous process it is necessary to have fast hydration in order to quickly develop fluid viscosity for suspending the propping materials down the well and into the fracture and generate a fracture of sufficient width. Also, the polymer should be adequately hydrated before the crosslinking reaction occurs in order to maximize the viscosity of the crosslinked gel.

The other additives such as crosslinkers, surfactants, fluid loss additives, proppants, breakers, biocides, etc. are then added to the fluid. The resultant mixture is then pumped at a rate sufficient to initiate and propagate the fracture in the subterranean formation.

In the batch process, the desired amount of copolymer, which is often available commercially as a powder or granular product or liquid emulsion, is dispersed in a tank (typically 91,000 litres (20,000 gallons)) filled with water or brine and circulated for at least thirty minutes to dissolve or disperse the copolymer in the water.

With the copolymer dissolved or dispersed in the water, pumping operations are commenced. The crosslinker suspension and breaker are added to the water on the fly, so that crosslinking occurs between the surface and the formation, at a desired time/depth. The crosslinked viscosity is developed at a subsurface location and is sufficient to generate the fracture of desired length and geometry.

Following breakdown of the formation in both the continuous and batch process, proppant is added to the fluid and carried to and deposited in the fracture. The well is then shut in permitting the fracture to close on the proppants and the breaker to degrade the crosslinked copolymer.

In another aspect, the fluid is useful for gravel packing a wellbore. As a gravel packing fluid, it may comprise gravel or sand and other optional additives such as filter cake clean up reagents such as chelating agents referred to above or acids (e.g. hydrochloric, hydrofluoric, formic, acetic, citric acid) corrosion inhibitors, scale inhibitors, biocides, leak-off control agents, among others. For this application, suitable gravel or sand is typically those having a mesh size between about 8 and about 70 U.S. Standard Sieve Series mesh.

The following examples are included to demonstrate preferred embodiments of the invention. It should be appreciated by those of skill in the art that the techniques disclosed in the examples which follow represent techniques discovered by the inventor(s) to function well in the practice of the invention, and thus can be considered to constitute preferred modes for its practice. However, those of skill in the art should, in light of the present disclosure, appreciate that many changes can be made in the specific embodiments which are disclosed and still obtain a like or similar result without departing from the scope of the invention.

### EXAMPLES

### Example 1: Comparative Borate Solubilities.

The borate solubility in 100 g of water was determined by the ETI Mine Works Laboratory, Ankara, Turkey (TS EN ISO 9001:2008 standards) for the refined borates, boric acid, borax decahydrate, and disodium octaborate tetrahydrate (DOT) at temperatures of 0 °C (32 °F), 20 °C (68 °F) and 40 °C (104 °F). The results of these solubility tests are shown in Table A.

**Table A: Borate Solubilities at Various Temperatures.**

| Temperature °C (°F) | B₂O₃ Solubility in 100g Water | | | | | |
|---|---|---|---|---|---|---|
| | Boric Acid, g | Change¹ % | Borax Decahydrate, g | Change % | DOT, g | Change % |
| 0 (32) | 1.42 | -- | 0.43 | -- | 1.6 | -- |
| 20 (68) | 2.66 | 87.3 | 0.94 | 118.6 | 6.3 | 293.8 |
| 40 (104) | 4.55 | 220.4 | 2.19 | 409.3 | 18.4 | 1,050.0 |

| | | | | | | |
|---|---|---|---|---|---|---|
| ¹ Percent change, relative to 0 °C (32 °F). | | | | | | |

Table A illustrates that from 0 °C (32 °F) - 40 °C (104 °F), the solubility of boric acid, borax decahydate, and DOT increase 220.4%, 409.3%, and 1,050.0%, respectively, as the temperature increases.

### Example 2: Boric Acid and Borax Decahydrate Solubilities Compared to DOT.

The results of Example 1 for boric acid and borax decahydrate were compared to the solubility for DOT at temperatures of 0 °C (32 °F), 20 °C (68 °F), and 40 °C (104 °F). The results of these comparisons are presented in Table B.

**Table B: Borate Solubility Comparisons.**

| Temperature °C/°F | B₂O₃ Solubility in 100g Water | | | | |
|---|---|---|---|---|---|
| | Boric Acid, g | Change¹ % | Borax Decahydrate, g | Change % | DOT, g |
| 0 (32) | 1.42 | 12.7 | 0.43 | 272.1 | 1.6 |
| 20 (68) | 2.66 | 136.8 | 0.94 | 570.2 | 6.3 |
| 40 (104) | 4.55 | 304.4 | 2.19 | 740.2 | 18.4 |

| | | | | | |
|---|---|---|---|---|---|
| Percent change, relative to DOT. | | | | | |

Table B demonstrates that over the temperature range from 0 °C (32 °F) - 40 °C (104 °F), the solubility of DOT is 12.7% - 304.4% greater than boric acid, and 272.1% - 740.2% greater than borax decahydrate.

### Example 3: Crosslink Time Comparisons for Disodium Octaborate Tetrahydrate (DOT) Solutions.

Experiments were performed on a series of compositions to determine the effect of disodium octaborate tetrahydrate (DOT), as a borate source in a crosslinking composition, on a fluid viscosified with a crosslinkable polymer. The viscous fluids were prepared by mixing 250 mL of Houston, TX tap water, 5g of KCI, 1.2g (40 lb/1,000 gal) of guar (JAGUAR® 308 NB, available from Rhodia Novecare, Vernon, TX) for 30-60 minutes on a OFITE Mod-22.115 mixer (available from OFI Testing Equipment, Inc., Houston, TX). The pH of the solutions were then adjusted to 9.5 and 11.5 with KOH. The guar mixtures had initial viscosities at 511 sec⁻¹ of 40 cP at 25 °C (77 °F) as measured on a FANN® Model 35A viscometer (available from the Fann Instrument Company, Houston, TX).

Preparation of TBC-X377 Borate Crosslinking Solution. TBC-X377 was prepared by combining 329.20 mL of water and 31.2g (8.67 wt %) of ETIDOT-67® (DOT, available from American Borate Company, Virginia Beach, VA). The ETIDOT-67® was dissolved in the water at ambient temperature, and the solution was used in the crosslink time tests described herein.

Preparation of TBC-X378 Borate Crosslinking Solution. TBC-X378 was prepared by combining 197.47 mL of water, 131.48 mL (37.7 wt %) of Susterra® (propanediol, available from DuPont Tate & Lyle, Loudon, TN), and 32.08g (8.73 wt %) of ETIDOT-67® (DOT, available from American Borate Company, Virginia Beach, VA). The ETIDOT-67® was dissolved in the water/propanediol mixture and the solution was used in the crosslink time tests described herein.

Preparation of TBC-X379 Borate Crosslinking Solution. TBC-X379 was prepared by combining 140.18 mL of water, 192.95 mL (55.1 wt %) of Susterra® (propanediol, available from DuPont Tate & Lyle, Loudon, TN), and 25.3g (6.87 wt %) of ETIDOT-67® (DOT, available from American Borate Company, Virginia Beach, VA). The ETIDOT-67® was dissolved in the water/propanediol mixture and the solution was used in the crosslink time tests described herein.

### Crosslinking Evaluation Procedure.

The degree of crosslinking of several of the boron-containing compositions prepared as described herein was determined using standard methods, as detailed, for example, in U.S. Patent No. 7,018,956. In general, to conduct the crosslinking tests a guar solution was prepared as previously explained, and the mixing speed of the blender motor was adjusted using a rheostat (e.g., a Variac voltage controller) to form a vortex in the guar solution so that the acorn nut (the blender blade bolt) and a small area of the blade, that surrounds the acorn nut in the bottom of the blender jar was fully exposed, yet not so high as to entrain significant amounts of air in the guar solution. While maintaining mixing at this speed, 0.5 mL (2 gal/1,000 gal) of boron-containing crosslinking additive was added to the guar solution to effect crosslinking. Upon addition of the entire boron-containing material sample to the guar solution, a timer was simultaneously started. The crosslinking rate is expressed by two different time recordings: vortex closure (T₁) and static top (T₂). T₁ is defined herein as the time that has elapsed between the time that the crosslinking additive is added and the time when the acorn nut in the blender jar becomes fully covered by fluid. T₂ is defined as the time that has elapsed between the time that the crosslinking additive/boron-containing material is added and the time when the top surface of the fluid in the blender jar has stopped rolling/moving and becomes substantially static. Those of ordinary skill in the art of evaluating fracturing fluids will quickly recognize the fundamental tenants of evaluating such fluids in the manner described in these Examples, although individual testing practices and procedures may vary from those described herein. The results of these tests are shown in Table C. As can be seen from the results, at pH values less than pH 10 (e.g., pH 9.5), the compositions exhibit both vortex closures and static tops of less than 20 seconds, and thus may be considered to be "instantaneous" in accordance with this disclosure. Under more basic conditions, e.g., a solution having pH values ranging from pH 10 to pH 12 (e.g., pH 11.5), the compositions still exhibit rapid vortex closures and static tops, but in times less than 1 minute (60 seconds), and thus may be considered to be "near instantaneous" in accordance with this disclosure.

**Table C: Crosslink Time Comparison for DOT Solutions.**

| | Crosslink Time, min:sec | | | |
|---|---|---|---|---|
| Composition | pH 9.5 | | pH 11.5 | |
| | Vortex Closure | Static Top | Vortex Closure | Static Top |
| TBC-X377¹ | 0:16 | 0:20 | 0:33 | 0:40 |
| TBC-X378² | 0:15 | 0:18 | 0:29 | 0:37 |
| TBC-X379³ | 0:13 | 0:16 | 0:31 | 0:39 |

| | | | | |
|---|---|---|---|---|
| ¹ Prepared as per Example 3, containing 31.2g of ETIDOT-67®. ² Prepared as per Example 3, containing 131.48 mL of Susterra® and 32.08 g of ETIDOT-67®. ³ Prepared as per Example 3, containing 192.95 mL of Susterra® and 25.3 g of ETIDOT-67®. | | | | |

### Example 4: Pour Points for Disodium Octaborate Tetrahydrate (DOT) Solutions.

Tests were conducted to determine the pour points of borate-containing crosslinking solutions that were formulated with various combinations of water, Susterra®, and ETIDOT-67®, as described in Example 3. The evaluation was performed on a Lawler Model 549 cloud and pour point bath (available from Lawler Manufacturing Corporation, Edison, NJ) according to the ASTM D97-11 test procedure. The results are shown in Table D.

**Table D: Pour Points for DOT Solutions.**

| Composition | °C (°F) |
|---|---|
| TBC-X377¹ | 3 (37.4) |
| TBC-X378² | -27 (-16.6) |
| TBC-X379³ | -45 (-49) |

| | |
|---|---|
| Prepared as per Example 3, containing 31.2g of ETIDOT-67®. ² Prepared as per Example 3, containing 131.48 mL of Susterra® and 32.08 g of ETIDOT-67®. ³ Prepared as per Example 3, containing 192.95 mL of Susterra® and 25.3 g of ETIDOT-67®. | |

### Example 5: Freeze/Thaw Evaluation for Disodium Octaborate Tetrahydrate (DOT) Solutions.

Experiments were performed on a series of compositions to determine the stability, through multiple freeze and thaw cycles, of borate-containing crosslinking solutions which are formulated with various combinations of water, Susterra® (propanediol, available from DuPont Tate & Lyle, Loudon, TN), and ETIDOT-67® (DOT, available from American Borate Company, Virginia Beach, VA), as described in Example 3. Samples of TBC-X377, TBC-X378, and TBC-X379 were mixed at 25 °C (77 °F) and placed in glass jars. Each solution was then frozen at temperatures of -3 °C (26.6 °F) for TBC-X327, -30 °C (-22 °F) for TBC-X328, and -48 °C (-54.4 °F) for TBC-X329 in a bath of dry ice and isopropyl alcohol. The samples were removed from the ice bath, returned to a temperature of 25 °C (77 °F), and observed for precipitation. The freeze/thaw/observation cycle was repeated three times. The results of these tests indicate that the compositions are stable without unwanted precipitation of materials at these low operating temperatures, illustrating the utility of the compositions in crosslinking operations at low temperatures and in low temperature working environments.

Two or more different refined borate materials can be used as the soluble crosslinking agents in the crosslinking agent composition. Further, the various methods and embodiments of the methods of treating subterranean formations can be included in combination with each other to produce variations of the disclosed methods and embodiments. Discussion of singular elements can include plural elements and vice-versa.

The order of steps can occur in a variety of sequences unless otherwise specifically limited. The various steps described herein can be combined with other steps, interlineated with the stated steps, and/or split into multiple steps. Similarly, elements have been described functionally and can be embodied as separate components or can be combined into components having multiple functions.

The inventions have been described in the context of preferred and other embodiments and not every embodiment of the invention has been described. Obvious modifications and alterations to the described embodiments are available to those of ordinary skill in the art.

## Claims

1. A method for formulating a boron-containing fracturing fluid having a pH greater than 8, the method comprising:
placing a first aqueous fluid into a suitable mixing device;
adding a stabilizer to the aqueous fluid in an amount from 0.1 g/L (1 lb/1,000 gal) to 5.0 g/L (50 lb/1,000 gal) of the aqueous fluid;
allowing the stabilizer to dissolve into the aqueous fluid for a first predetermined period of time;
adding a natural hydratable polymer to the mixture in an amount ranging from 1.0 g/L (10 lb/1,000 gal) to 10 g/L (100 lb/1,000 gal) of the aqueous fluid;
mixing the mixture for a second predetermined period of time;
adding an alkaline buffer to the mixture in an amount sufficient to raise the pH of the mixture to a pH greater than pH 8;
mixing the mixture for a third predetermined period of time;
adding a boron-containing crosslinking composition comprising a refined borate crosslinking agent in a second aqueous fluid and a freeze point depressant, wherein said refined borate crosslinking agent is disodium octaborate tetrahydrate and said freeze point depressant is 1,3-propanediol; and
mixing until gelation occurs, thereby producing the fracturing fluid.,
wherein said refined borate has been exposed to both chemical and mechanical processing steps prior to use.

2. The method of claim 1, wherein the aqueous fluid is selected from the group consisting of fresh water, natural brines, and artificial brines.

3. The method of claim 1, wherein the stabilizer is a clay stabilizer.

4. The method of claim 1, wherein the alkaline buffer comprises alkaline compounds, optionally wherein said alkaline compounds:
i) comprise one or more selected from the group consisting of ammonium, alkali metal (group 1) hydroxides, carbonates and bicarbonates, and alkaline earth metal (Group 2) hydroxides, carbonates, and bicarbonates; or
ii) are selected from the group consisting of sodium hydroxide, sodium carbonate, sodium bicarbonate, potassium hydroxide, potassium carbonate, and potassium bicarbonate.

5. The method of claim 1, as used for formation stimulation treatments, fracturing operations, wellbore cleanout, gravel packing, diversion, fluid loss control, scale removal, acidizing, matrix treatment, or clean-up.

## Patentansprüche

1. Verfahren zur Formulierung eines borhaltigen Frakturierungsfluids mit einem pH-Wert von höher als 8, wobei das Verfahren umfasst:
Anordnen eines ersten wässrigen Fluids in einer geeigneten Mischvorrichtung;
Zugeben eines Stabilisators zu dem wässrigen Fluid in einer Menge von 0,1 g/l (1 lb/1.000 gal) bis 5,0 g/l (50 lb/1.000 gal) bezogen auf das wässrige Fluid;
mit einer ersten vorbestimmten Zeitdauer Erlauben, dass sich der Stabilisator in dem wässrigen Fluid löst;
Zugeben eines natürlichen hydratisierbaren Polymers zu dem Gemisch in einer Menge in dem Bereich von 1,0 g/l (10 lb/1.000 gal) bis 10 g/l (100 lb/1.000 gal) bezogen auf das wässrige Fluid;
mit einer zweiten vorbestimmten Zeitdauer Mischen des Gemischs;
Zugeben eines alkalischen Puffers zu dem Gemisch in einer Menge, die ausreicht, um den pH-Wert des Gemischs auf einen pH-Wert von höher als pH 8 zu erhöhen;
mit einer dritten vorbestimmten Zeitdauer Mischen des Gemischs;
Zugeben einer borhaltigen Vernetzungszusammensetzung, die ein aufbereitetes Boratvernetzungsmittel in einem zweiten wässrigen Fluid und einen Gefrierpunktsenker umfasst, wobei das aufbereitete Boratvernetzungsmittel Dinatriumoctaborattetrahydrat ist und der Gefrierpunktsenker 1,3-Propandiol ist; und
Mischen, bis Gelieren erfolgt, um das Frakturierungsfluid zu erhalten,
wobei das raffinierte Borat vor der Verwendung gegenüber sowohl chemischen als auch mechanischen Verarbeitungsschritten exponiert worden ist.

2. Verfahren gemäß Anspruch 1, wobei das wässrige Fluid ausgewählt ist aus der Gruppe bestehend aus Frischwasser, natürlichen Kochsalzlösungen und künstlichen Kochsalzlösungen.

3. Verfahren gemäß Anspruch 1, wobei der Stabilisator ein Tonstabilisator ist.

4. Verfahren gemäß Anspruch 1, wobei der alkalische Puffer alkalische Verbindungen umfasst, wobei die alkalischen Verbindungen gegebenenfalls:
i) eines oder mehrere ausgewählt aus der Gruppe bestehend aus Ammonium, Alkalimetall(Gruppe 1)-hydroxiden, -carbonaten und -bicarbonaten und Erdalkalimetall(Gruppe 2)-hydroxiden, -carbonaten und -bicarbonaten umfassen; oder
ii) ausgewählt sind aus der Gruppe bestehend aus Natriumhydroxid, Natriumcarbonat, Natriumbicarbonat, Kaliumhydroxid, Kaliumcarbonat und Kaliumbicarbonat.

5. Verfahren gemäß Anspruch 1, wie verwendet für/zur Formationsstimulationsbehandlungen, Frakturierungsarbeiten, Bohrlochreinigung, Kiespackung, Umleitung, Fluidverlustbeherrschung, Ablagerungsentfernung, Säuerung, Matrixbehandlung oder Säuberung.

## Revendications

1. Procédé de formulation d'un fluide de fracturation contenant du bore de pH supérieur à 8, le procédé comprenant les étapes consistant à :
placer un premier fluide aqueux dans un dispositif de mélangeage adapté ;
ajouter un stabilisant au fluide aqueux à une teneur comprise entre 0,1 g/L (1 livre/1000 gal) et 5,0 g/L (50 livres/1000 gal) du fluide aqueux ;
laisser le stabilisant se dissoudre dans le fluide aqueux pendant une première durée prédéterminée ;
ajouter un polymère naturel hydratable au mélange à une teneur comprise entre 1,0 g/L (10 livres/1000 gal) et 10 g/L (100 livres/1000 gal) du fluide aqueux ;
mélanger le mélange pendant une deuxième durée prédéterminée ;
ajouter un tampon basique au mélange à une teneur suffisante pour augmenter le pH du mélange jusqu'à un pH supérieur à 8 ;
mélanger le mélange pendant une troisième durée prédéterminée ;
ajouter une composition réticulante contenant du bore comprenant un agent de réticulation à base de borate raffiné dans un deuxième fluide aqueux et un dépresseur de point de congélation, où ledit agent de réticulation à base de borate raffiné est l'octaborate de disodium tétrahydraté et ledit dépresseur de point de congélation est le 1,3-propanediol ; et
mélanger jusqu'à la gélification, produisant ainsi le fluide de fracturation,
où ledit borate raffiné a été exposé à des étapes de traitement chimique comme mécanique avant utilisation.

2. Procédé selon la revendication 1, où le fluide aqueux est choisi dans le groupe constitué par l'eau douce, les saumures naturelles et les saumures artificielles.

3. Procédé selon la revendication 1, où le stabilisant est un stabilisant à base d'argile.

4. Procédé selon la revendication 1, où le tampon basique comprend des composés basiques, éventuellement où lesdits composés basiques :
i) comprennent un ou plusieurs membres du groupe constitué par l'ammonium, les hydroxydes, carbonates et bicarbonates de métaux alcalins (groupe 1), et les hydroxydes, carbonates et bicarbonates de métaux alcalino-terreux (groupe 2) ; ou
ii) sont choisis dans le groupe constitué par l'hydroxyde de sodium, le carbonate de sodium, le bicarbonate de sodium, l'hydroxyde de potassium, le carbonate de potassium et le bicarbonate de potassium.

5. Procédé selon la revendication 1, comme utilisé dans les traitements de stimulation de formations, les opérations de fracturation, le dégagement des puits de forage, le tassement de graviers, la déviation, la régulation de pertes de fluide, l'élimination de tartre, l'acidification, le traitement matriciel ou le nettoyage.
